# EUROPÄISCHE PATENTSCHRIFT

(11) **EP 3 140 634 B1**
(45) Veröffentlichungstag und Bekanntmachung des Hinweises auf die Patenterteilung: **20.12.2017**
(21) Anmeldenummer: 15726546.3
(22) Anmeldetag: 08.05.2015
(51) Int. Cl.: G01J 1/08, G01J 3/10, G01N 21/47, G01J 1/04, G02B 19/00

(54) **BELEUCHTUNGSEINRICHTUNG**
ILLUMINATION DEVICE
DISPOSITIF D'ÉCLAIRAGE

(30) Priorität: 08.05.2014 EP 14167594
(43) Veröffentlichungstag der Anmeldung: 15.03.2017
(73) Patentinhaber: Image Engineering GmbH & Co. KG, 50169 Kerpen-Horrem (DE)
(72) Erfinder: WÜLLER, Dietmar, 50129 Bergheim (DE)
(74) Vertreter: Simandi, Claus
(86) Internationale Anmeldenummer: PCT/EP2015/060191
(87) Internationale Veröffentlichungsnummer: WO 2015/169949

(56) Entgegenhaltungen:
- WO-A1-2013/072885
- US-A1- 2009 204 109
- US-A1- 2011 108 741
- US-B1- 6 437 861

## Beschreibung

### Gebiet der Erfindung

Die vorliegende Erfindung betrifft eine Beleuchtungseinrichtung, mit der, insbesondere für wissenschaftliche Zwecke oder Zwecke der Qualitätsprüfung, eine Fläche besonders gleichmäßig ausgeleuchtet werden kann. Die Beleuchtungseinrichtung umfasst dabei zumindest eine Lichtquelle und eine Homogenisierungseinrichtung.

### Hintergrund der Erfindung

Die gleichmäßige Ausleuchtung von Objekten ist auf mehreren Gebieten ein wichtiges Anliegen. In der wissenschaftlichen Anwendung spielt sie beispielsweise auf den Gebieten der Umweltdiagnose der Biotechnologie und der Chemie eine Rolle, etwa wenn es darum geht, die Transmissions- oder Reflexionseigenschaften einer Probe zu erfassen. Ebenfalls wichtig ist die gleichmäßige Ausleuchtung im Bereich der Optik. Hier kann es um Testverfahren zur Prüfung von Optiken und Kameras gehen, also sowohl von Linsensystemen als auch von Sensoren.

Ein bekannter Ansatz zur Erzeugung von homogenem Licht ist der Einsatz einer Ulbrichtkugel. Eine solche Kugel verfügt über einen Lichteinlass und eine Auslassöffnung. Verglichen mit diesen Öffnungen ist die Kugel groß. In der Regel sollte der Kugeldurchmesser mindestens 5x größer sein als der Durchmesser der Auslassöffnung. Vorzugsweise werden auch nur maximal 5% der (inneren) Kugeloberfläche von Öffnungen durchbrochen.

Aus dem Stand der Technik ist eine Reihe von Anwendungen für diesen bislang praktisch alternativlosen Ansatz zur homogenen Beleuchtung von Objekten bekannt.

Die deutsche Patentschrift DE 101 06 032 B4 (Patentinhaber: Laser-Laboratorium Göttingen e.V.) offenbart eine Vorrichtung zur homogenen Ausleuchtung einer kleinen Fläche mit einer Ulbricht'schen Kugel. Eine Besonderheit dieses Ansatzes ist, dass mindestens zwei Lichtquellen innerhalb der Kugel vorgesehen sind. Diese Lichtquellen werden in der Kugelwand angeordnet. Die Vorrichtung soll besonders vorteilhaft zur homogenen Ausleuchtung einer Fläche sein, wenn es um die schnelle Änderungen der spektralen Eigenschaften der Beleuchtung geht.

Die deutsche Patentschrift DE 28 34 983 C3 (Patentinhaber: V. Blazek) offenbart eine alternative Anwendung einer Ulbricht'schen Kugel. Hier geht es um einen Messkopf für Beleuchtungsmessgeräte. In diesem Fall wird der zu messende Lichtstrom in die Kugel eingeleitet. An einer Öffnung der Kugel ist daher ein Photodetektor vorgesehen. Typisch für die Verwendung der Ulbrichtkugel ist, dass zwischen Lichtquelle und Photodetektor ein Abschatter vorgesehen ist. Die Kugelform der Ulbrichtkugel macht es möglich, dass Licht auf direktem Wege von einer Einlassöffnung zu einer Auslassöffnung gelangt. (Allenfalls kann dies durch die Anordnung der Lichtquelle außerhalb der Kugel vermieden werden.) In diesem Falle also könnte Licht des zu messenden einfallenden Lichtstromes unmittelbar auf den Photodetektor gelangen. Dies würde die Messung verfälschen, da es ja gerade um die gleichmäßige Lichtverteilung vor der Detektion geht. Die Verwendung eines Abschatters ist daher typisch und spielt auch bei diesem Einsatz der Ulbrichtkugel als Messkopf für Beleuchtungsstärke-Messgeräte eine Rolle.

Das US-Patent US 8,259,294 B2 (Patentinhaber: Von-Ardenne-Anlagentechnik GmbH) offenbart wiederum einen Einsatz einer Ulbrichtkugel zur Erzeugung homogenen Lichtes. Hierbei geht es um den effizienten Einsatz der Kugel zur Messung der Reflexion und Transmission von Substratplättchen. Da die Substratplättchen auf einer Art Förderband an der Kugel vorbeigeleitet werden können, kommt hier sogar ein industrieller Einsatz in Betracht. Die Lichtquelle ist innerhalb der Kugel positioniert, zu beiden Seiten der Lichtquelle sind wiederum Abschatter (auch "Schatter" genannt) vorgesehen. Der Messaufbau nimmt im Verhältnis zu den kleinen zu messenden Objekten viel Raum ein. Die Patentschriften US 6 437 861 B1, US 2009/204109 A1 und WO 2013/072885 offenbaren weitere Homogenisierungsvorrichtungen. Die vorliegende Erfindung möchte den Stand der Technik verbessern. Es soll eine Beleuchtungseinrichtung angeboten werden, welche eine kompakte Bauform erlaubt und dennoch effizient arbeitet. Dabei kommt es durchaus in Betracht, diese Beleuchtungseinrichtung auch im industriellen Einsatz zu verwenden.

### Nähere Beschreibung der Erfindung

Diese Aufgabe wird durch eine Beleuchtungseinrichtung nach Anspruch 1 gelöst.
Demgemäß kann die Lichtquelle integral, fest oder lösbar mit anderen Elementen, insbesondere der Homogenisierungseinrichtung, verbunden sein. Als Lichtquelle wird eine Vielzahl von LEDs verwendet. Diese können auf einer Platte angeordnet werden. In dieser Weise kann eine flächige Lichtquelle gebildet werden. Es ist auch möglich, mehr als eine Lichtquelle vorzusehen, beispielsweise zwei Lichtquellen, die jeweils separat eine bauliche Einheit bilden.

Die Homogenisierungsvorrichtung umfasst eine Eintrittsöffnung, eine hinter der Eintrittsöffnung angeordnete Eintrittskammer, eine Zwischenkammer, eine Austrittskammer und eine hinter der Austrittskammer angeordnete Austrittsöffnung. Diese Kammern weisen jeweils eine Außenfläche und eine Innenfläche auf.

Eine im Bereich der Eintrittsöffnung angeordnete Lichtquelle kann Licht durch die Eintrittskammer, die Zwischenkammer, die Austrittskammer und die Austrittsöffnung auf ein aufzuleuchtendes Objekt senden. Die erfindungsgemäße Anordnung ist so, dass dabei kein Lichtstrahl entlang einer Geraden von einem Punkt der Eintrittsöffnung zu einem Punkt der Austrittsöffnung gelangen kann.

Ferner sind jeweils mindestens die halbe Innenfläche der Eintrittskammer, der Zwischenkammer und der Austrittskammer diffus reflektierend gestaltet. Die diffus reflektierend gestalteten Flächen können so angeordnet sein, dass sie überwiegend zur Lichtreflektion beitragen. Es ist aber auch möglich, mehr als die halbe Innenfläche der jeweiligen Kammer, beispielsweise mehr als 70%, 80% oder 90% der Innenflächen oder auch die ganzen Innenflächen mindestens einer oder aller Kammern diffus reflektierend zu gestalten.

Die Innenflächen der Kammern sollen dabei zumindest dort, wo sie diffus reflektierend sind, so gestaltet sein, dass ein an einer dieser Innenflächen reflektierter Lichtstrahl, welcher einfallend eine erste Referenzfläche mit einer ersten Bestrahlungsstärke ausleuchtet, ausfallend eine symmetrisch positionierte zweite Referenzfläche gleicher Größe mit einer zweiten Beleuchtungsstärke ausleuchtet, wobei die zweite Bestrahlungsstärke mindestens einen Faktor 3 geringer ist als die erste Bestrahlungsstärke. Die diffus reflektierenden Flächen können auch so gestaltet sein, dass dieser Faktor 5, 10 oder mehr beträgt. Hierdurch wird erreicht, dass nur ein geringer Lichtanteil einer klassischen Spiegelreflektion unterliegt, also einer, bei der Einfallswinkel gleich Ausfallswinkel ist.

Die beschriebenen Referenzflächen sollen dabei eine Größe von 5 mm x 5 mm haben. Die erste Referenzfläche soll in der Einfallsrichtung eines Teststrahls 10 mm über der reflektierenden Oberfläche angeordnet werden. Die zweite Referenzfläche, welche in Ausfallsrichtung angeordnet ist, soll in Ausfallsrichtung eines spiegelreflektierten Stahles ebenfalls den Abstand von 10 mm zum Reflexionspunkt haben.

In dieser überraschenden Weise ist es trotz der zum Teil kantigen inneren Geometrie der Homogenisierungseinrichtung möglich, ein sehr homogenes austretendes Licht zu erhalten. Dies ist auch insoweit überraschend als der bewährte Ansatz, der durch eine Kugel repräsentierten vollständigen Symmetrie der Innenflächen aufgegeben wird. Nichtsdestotrotz wird auch eine sehr homogene spektrale Lichtverteilung erreicht.

Ferner erlaubt es diese Fortentwicklung auch, im Inneren der Kammer auf Schatter zu verzichten. Da das Innere der entsprechenden Kammern schwer zugänglich ist und auch eine möglichst homogene Oberfläche aufweisen soll ist die Notwendigkeit, einen Schatter vorzusehen, ein wesentlicher Nachteil im Stande der Technik, welcher jedoch mit Ulbrichtkugeln nur überwunden werden kann, indem die Lichtquelle zurückversetzt, also mit Abstand zur Kugel, angeordnet wird und z.B. über einen Tubus einstrahlt.

Alternativ oder zusätzlich kann die vorteilhafte Gestaltung der Innenflächen der genannten Kammern auch in anderer Weise erreicht werden. Beispielsweise ist es zweckmäßig, die Innenflächen so zu gestalten, dass ein an einer dieser Innenflächen reflektierter Lichtstrahl, welcher einfallend einen ersten Raumwinkel beleuchtet, ausfallend einen mindestens 3x oder 10x größeren Raumwinkel beleuchtet.

Zweckmäßig werden die Innenflächen matt oder stumpf matt gestaltet. Die Innenflächen sollen daher einen Glanzgrad von weniger als 10, vorzugsweise auch weniger als 8, 5 oder 3 haben. Die Glanzgradmessung erfolgt dabei zweckmäßig nach EN ISO 2813 unter Verwendung einer 85-Grad-Geometrie.

Die Erfindung bezieht sich daher auch auf homogenen Beleuchtungseinrichtung zur homogenen Ausleuchtung eines Objekts, welche eine Homogenisierungseinrichtung umfasst und ein Lichtquelle umfassen kann, wobei die Homogenisierungsvorrichtung eine Eintrittsöffnung, eine hinter der Eintrittsöffnung angeordnete Eintrittskammer, eine Zwischenkammer, eine Austrittskammer und eine hinter der Austrittskammer angeordnete Austrittsöffnung aufweist und die Eintrittskammer, die Zwischenkammer und die Austrittskammer jeweils eine Außenfläche und eine Innenfläche aufweisen und sich die Eintrittskammer entlang einer ersten Hauptachse erstreckt und sich die Austrittskammer entlang einer zweiten Hauptachse erstreckt, und eine im Bereich der Eintrittsöffnung vorsehbare Lichtquelle Licht durch die Eintrittskammer, die Zwischenkammer, die Austrittskammer und die Austrittsöffnung auf ein auszuleuchtendes Objekt senden kann, dadurch gekennzeichnet dass kein Lichtstrahl entlang einer Geraden von einem Punkt der Eintrittsöffnung zu einem Punkt der Austrittsöffnung gelangen kann und dass jeweils mindestens die Innenfläche der Eintrittskammer, der Zwischenkammer und der Austrittskammer in jeweils mindestens einem ersten Bereich diffus reflektierend sind und einen Glanzgrad von 10% oder weniger aufweisen.

Zweckmäßig ist es, bei der Beleuchtungseinrichtung die Eintrittskammer und die Austrittskammer zueinander so anzuordnen, dass die erste Hauptachse und die zweite Hauptachse senkrecht zueinander verlaufen. Ebenfalls ist es zweckmäßig, die Kammern so zu dimensionieren, dass die erste Hauptachse die längste Hauptachse der Eintrittskammer ist und dass die zweite Hauptachse die längste Hauptachse der Austrittskammer ist. Zweckmäßig ist es, wenn die erste Hauptachse durch das Zentrum der Eintrittsöffnung verläuft und wenn die zweite Hauptachse durch das Zentrum der Austrittsöffnung verläuft.

Diese Anordnung der Kammern erlaubt eine kompakte Bauform. Dabei kann trotz insgesamt geringem Lichtausbreitungsweg zwischen Eintrittsöffnung und Austrittsöffnung ein sowohl intensitätsmäßiges als auch von der spektralen Verteilung her homogenes Licht erzeugt werden. Diese Bauform erlaubt es, ebenfalls ohne Schatter auszukommen. Die Innenflächen der Kammern können dabei im Wesentlichen glatt und kantenfrei gestaltet werden.
Erfindungsgemäß ist es, wenn eine flächige Lichtquelle verwendet wird. Eine solche flächige Lichtquelle sendet verteilt über eine bestimmte Fläche Licht aus. Die Fläche wird dabei nicht vollständig von LEDs ausgefüllt, über diese Fläche hinweg sind aber LEDs oder andere Strahler verteilt. Diese Fläche sollte relativ groß im Verhältnis zur Fläche der Eintrittsöffnung sein. Es ist erfindungsgemäß, wenn diese Fläche mindestens 50% der Fläche der Eintrittsöffnung in Anspruch nimmt, zweckmäßig kann auch ein Wert von 70% oder 90% sein.
Die Eintrittskammer wird so gestaltet, dass sie rohrförmig die erste Hauptachse umschließt und dementsprechend senkrecht zur ersten Hauptachse eine Vielzahl von Querschnitten aufweist. Bei einer günstigen geometrischen Gestaltung der Eintrittskammer ist dabei die jeweils längste Ausdehnung eines Querschnittes kürzer als die erste Hauptachse. In entsprechender Weise soll die Austrittskammer rohrförmig die zweite Hauptachse umschließen. Auch die Austrittskammer kann senkrecht zur zweiten Hauptachse eine Vielzahl von Querschnitten aufweisen. Dabei ist es wiederum vorteilhaft, wenn die längste Ausdehnung eines Querschnittes jeweils kürzer als die zweite Hauptachse ist. Eine einfache und zweckmäßige Bauform sowohl für die Eintrittskammer als auch für die Austrittskammer ergibt sich, wenn alle Querschnitte die gleiche Form haben. Nützlich ist dabei eine rechteckige, quadratische oder kreisförmige Querschnittsform. Eine elliptische Form kann ebenfalls genutzt werden. In bevorzugten Ausführungsformen sind die Eintrittskammer und die Austrittskammer dementsprechend zylinder- oder quaderförmig. Eine quaderförmige Eintritts- oder Austrittskammer ist leicht von einer nicht-quaderförmigen Zwischenkammer abgrenzbar. Die Abgrenzung zwischen Eintrittskammer und Zwischenkammer und zwischen Austrittskammer und Zwischenkammer kann alternativ in der Regel auch dadurch erfolgen, dass die erste Hauptachse Symmetrieachse der Eintrittskammer ist, nicht aber die Zwischenkammer und die zweite Hauptachse Symmetrieachse der Austrittskammer nicht aber der Zwischenkammer ist.

Günstig ist es, wenn die Innenfläche(n) der Eintrittskammer, der Zwischenkammer und/oder der Austrittskammer vollständig diffus reflektierend sind. Dies kann insbesondere auch durch das Vorsehen einer Beschichtung erreicht werden, welche dann die reflektierende Fläche bildet. Zweckmäßige Materialien für eine solche Beschichtung sind Bariumsulfat, Titandioxid oder Polytetrafluorethylen.

Erfindungsgemäß für die Wahl der Lichtquelle ist es, eine Vielzahl von LED-Lampen vorzusehen. Dabei sind zwischen 10 und 200 Lampen in der Regel angemessen, häufig zwischen 50 und 100 Lampen. Diese Lampen können in einer Ebene angeordnet werden. Dazu können sie beispielsweise auf einer Platte montiert werden. Die jeweils strahlenden Teile der LED-Lampen können dabei über die Platte hinausragen. Ein auch spektral besonders homogenes Licht lässt sich dadurch erzeugen, dass bei der Lichtquelle eine Vielzahl von Strahlern, beispielsweise 5, 10, 20 oder mehr jeweils verschiedener Frequenz zu Gruppen zusammengeschaltet werden. Die Homogenisierungseinrichtung erlaubt mit Lichtquellen, welche weniger als 30 solcher Gruppen ausweisen, ein auch spektral sehr homogenes Licht zu erzeugen.

Weitere Merkmale, aber auch Vorteile der Erfindung ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Die Abbildungen sind teilweise leicht vereinfacht und schematisch.
- Fig. 1: ist eine perspektivische Darstellung einer erfindungsgemäßen Homogenisierungseinrichtung.
- Fig. 2: ist ein schematisches Schnittbild durch eine maßlich ähnliche erfindungsgemäße Homogenisierungseinrichtung.
- Fig. 3: zeigt in perspektivischer Aufsicht eine Lichtquelle, welche zweckmäßigerweise im Rahmen der vorliegenden Erfindung eingesetzt werden kann.
- Fig. 4: ist eine schematische Darstellung eines Messaufbaus zur Bestimmung einer geeigneten Innenfläche für die Homogenisierungseinrichtung.

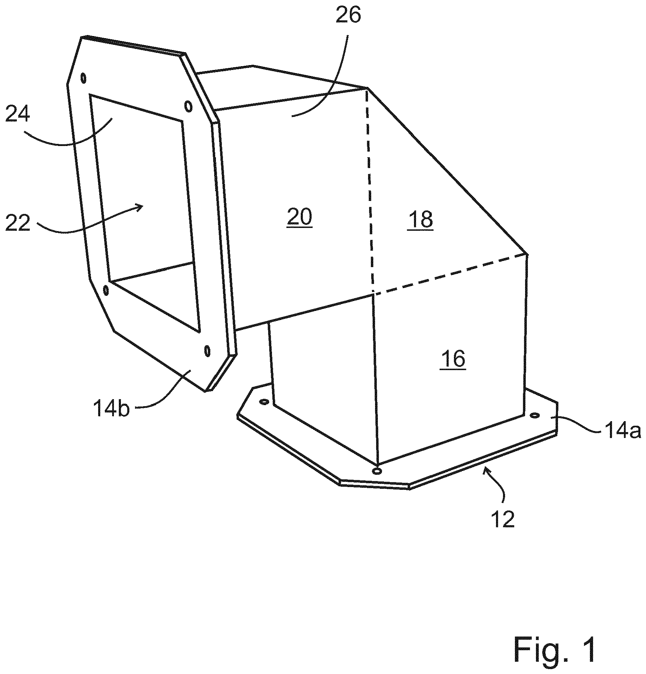

Fig. 1 zeigt in einer perspektivischen Ansicht von der Seite eine zeichnerische Darstellung einer erfindungsgemäßen Homogenisierungseinrichtung 10. Diese weist eine Eintrittsöffnung 12 auf. Die Eintrittsöffnung 12 selbst ist von einem Flansch 14a umgeben. Hinter der Eintrittsöffnung liegt die Eintrittskammer 16. Diese geht in eine Zwischenkammer 18 über. Hinter der Zwischenkammer 18 liegt die Austrittskammer 20. Die Austrittskammer 20 endet mit der Austrittsöffnung 22, welche ebenfalls durch einen Flansch 14b umgeben ist. Im Bereich der Austrittsöffnung 22 erkennt man die Innenfläche 24 der Austrittskammer 20. Ferner weist die Austrittskammer 20 eine Außenfläche 26 auf. Die Innenfläche 24 und die Außenfläche 26 der Austrittskammer 20 gehen in entsprechende Innen- und Außenflächen der Zwischenkammer 18 und der Eintrittskammer 16 über.

Die Eintrittskammer ist quaderförmig. Sie umschließt eine erste Hauptachse, die vom Zentrum der Eintrittsöffnung 12 nach oben ragt. Die Zwischenkammer 18 verbindet die Eintrittskammer 16 mit der Austrittskammer 20. Sie weist rechteckige Querschnitte auf. In der seitlichen Aufsicht hat sie jedoch eine Dreiecksform. Die Austrittskammer ist ebenfalls quaderförmig. Sie verläuft entlang einer zweiten Hauptachse, welche durch das Zentrum der Austrittsöffnung 22 verläuft.

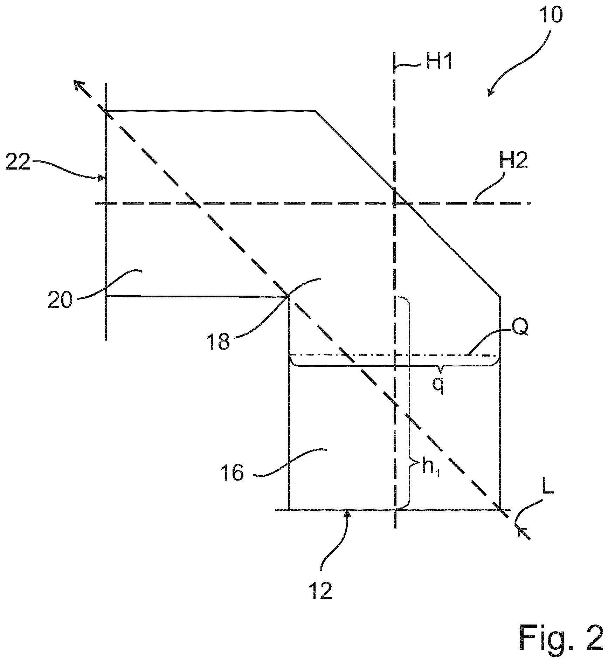

Fig. 2 zeigt eine schematische seitliche Schnittansicht einer erfindungsgemäßen Homogenisierungseinrichtung. Von der in dieser Zeichnung unten angeordneten Eintrittskammer 16 kann Licht über die Zwischenkammer 18 in die Austrittskammer 20 gelangen. Man erkennt, dass die erste Hauptachse H1 durch das Zentrum der Eintrittsöffnung 12 verläuft. Entsprechend verläuft die zweite Hauptachse H2 durch das Zentrum der Austrittsöffnung 22. Die beiden Hauptachsen stehen senkrecht zueinander. Ferner ist eine Referenzlinie L eingezeichnet, welche von einem am Rande der Eintrittsöffnung befindlichen Punkt zu einem am Rande der Austrittsöffnung befindlichen Punkt führt. Diese Linie verbindet zwei Punkte, welche gerade eben noch zur Eintrittsöffnung beziehungsweise zur Austrittsöffnung gehören. Entlang dieser Linie könnte jedoch kein Licht von der Eintrittsöffnung 12 zur Austrittsöffnung 22 gelangen, da die Kante der Zwischenkammer 18 der Lichtausbreitung im Wege ist.

Diese geometrische Ansicht erklärt also, dass die vorliegende geometrische Konstruktion der Homogenisierungseinrichtung 10 ohne die bei einer Ulbrichtkugel üblichen Schatter auskommt. Die Innenflächen der Kammern können vielmehr komplett glatt und kantenfrei gestaltet werden. Man erkennt, dass es hierfür wichtig ist, dass die Ausdehnung der Kammern, insbesondere der Eintrittskammer 16 und der Austrittskammer 20 senkrecht zu ihrer ersten Hauptachse H1 beziehungsweise zweiten Hauptachse H2 nicht zu groß sein kann. Daher wurde es im Rahmen dieser Erfindung als vorteilhaft erkannt, wenn die längste Ausdehnung eines Querschnittes Q kleiner ist als die Länge der Hauptachse, beispielsweise die relevante Länge der ersten Hauptachse H1 ist.

Die Fig. 1 und die Fig. 2 zeigen Konzepte der vorliegenden Erfindung, die auch unabhängig von der Darstellung in diesen Abbildungen Teil der Erfindung sind. Es gibt eine Vielzahl von Querschnittsebenen, welche zumindest senkrecht zur Eintrittsöffnung verlaufen. Eine solche Querschnittsebene ist in Fig. 2 abgebildet. Die Querschnittsebenen verlaufen in der Regel auch senkrecht zur Austrittsöffnung. In mindestens einer solchen Querschnittsebene kann nach einer bevorzugten Ausführungsform der Erfindung ein Lichtstrahl senkrecht zur Eintrittsöffnung eintreten, wird dann einmal reflektiert und tritt senkrecht zur Austrittsöffnung aus. Die Fläche, an der der Lichtstrahl reflektiert wird, nimmt dabei vorzugsweise einen 45 Grad Winkel zur Eintrittsöffnung ein. In nützlichen Ausführungsformen kann dies für alle Querschnittsebenen gelten, welche senkrecht zur Eintrittsöffnung und/oder zur Austrittsöffnung stehen.

Nach einem weiteren allgemeinen Aspekt der vorliegenden Erfindung soll sich eine erfindungsgemäße Beleuchtungseinrichtung in mindestens einer Querschnittsebene, welche senkrecht zur Eintrittsöffnung verläuft, als Kombination einer rechteckförmigen Eintrittskammer und einer rechteckförmigen Austrittskammer darstellen lassen. Vorzugsweise hat die Zwischenkammer in der entsprechenden Querschnittsebene eine Dreiecksform. Dabei ist es zweckmäßig, wenn die Seiten des Dreiecks bündig an die benachbarten Seiten der Rechtecke anstoßen. Die Eintrittskammer und die Austrittskammer können dabei zweckmäßigerweise auch eine quadratische Form haben.

Im Einklang mit diesen Überlegungen kann eine erfindungsgemäße Beleuchtungseinrichtung eine Eintrittskammer aufweisen, welche quaderförmig ist. Sie kann ebenso eine quaderförmige Austrittskammer aufweisen. Die beiden Kammern können auch würfelförmig sein. Eine erfindungsgemäße Zwischenkammer kann die Form eines Halbquaders einnehmen. Unter einem Halbquader ist dabei ein diagonal geschnittener Quader zu verstehen, bei dem die Schnittebene in Verlängerung einer Diagonalen auf einer Seitenfläche verläuft. Zweckmäßigerweise ist die Fläche des Halbquaders, welche keinen rechten Winkel mit ihren Nachbarflächen einschließt, die hauptsächliche Reflexionsfläche der Zwischenkammer, also die Reflexionsfläche, an der der größte Teil des Lichtes auf dem Weg von der Eintrittskammer zur Austrittskammer reflektiert wird.

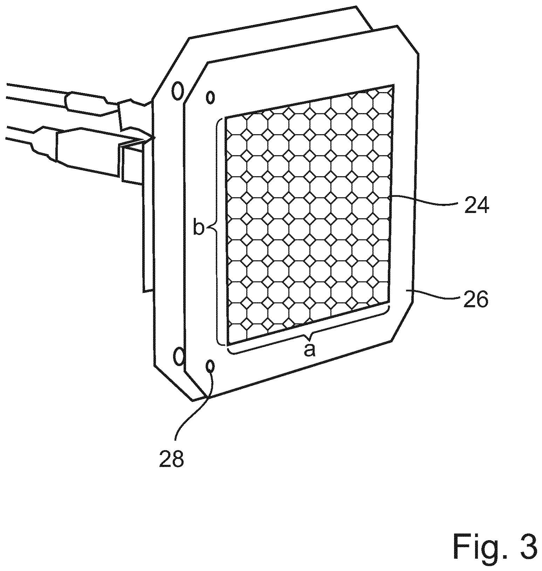

Fig. 3 zeigt eine zweckmäßige Lichtquelle zur Verwendung mit der vorliegenden Erfindung. Bei dieser Lichtquelle ist eine Vielzahl von LEDs 24 auf einer Trägerplatte 26 angeordnet. Dies ergibt eine flächige Lichtquelle. Die LEDs nehmen eine Fläche ein, welche durch das Produkt der Strecken a und b gegeben ist. Die Lichtquelle weist zweckmäßigerweise ca. 80 LEDs auf, die 22 verschiedene Frequenzen ausstahlen. (Die Wiedergabe der LED-Anordnung in Fig. 3 ist leicht vereinfacht.) Die Trägerplatte kann zweckmäßigerweise Verbindungsvorrichtungen aufweisen, beispielsweise mindestens ein Loch 28, welches zur Verschraubung der Trägerplatte 26 mit der gezeigten Flansch 14a dienen kann.

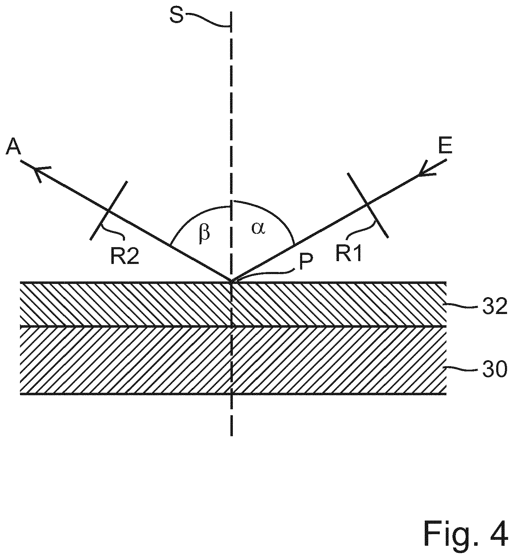

Fig. 4 zeigt in schematischer Ansicht einen Aufbau, mit welchem die Eignung einer Fläche zur Verwendung als diffus reflektierende Innenfläche im Rahmen der vorliegenden Erfindung überprüft werden kann. Gezeigt wird ein einfallender Lichtstrahl E, der am Punkt P auf eine Innenfläche tritt. Diese Innenfläche ist hier dargestellt als bestehend aus einem Trägermaterial 30 und einer aufgebrachten Beschichtung 32. Bei ideal spiegelnder (aber tatsächlich im Rahmen der Erfindung nicht vorzusehender) Reflexion würde der einfallende Lichtstrahl E in Richtung des ausfallenden Lichtstrahls A reflektiert. Dabei gilt der Einfallswinkel α (alpha) gleich Ausfallswinkel β (beta) ist, jeweils gemessen zur Senkrechten S auf der reflektierenden Fläche (hier der Beschichtung 32) am Reflexionspunkt P. In einem zweckmäßigen Abstand von Punkt P kann senkrecht zur Richtung des einfallenden Lichtes eine Referenzfläche R1 vorgesehen werden. In gleichem Abstand von P wird in Richtung des ausfallenden Strahls A eine zweite Referenzfläche R2 vorgesehen.

An beiden Referenzflächen kann die Bestrahlungsstärke gemessen werden. Diese wird zweckmäßigerweise in Watt pro Quadratmeter gemessen. Im Bereich sichtbaren Lichtes könnte alternativ auch die Beleuchtungsstärke in Candela pro Quadratmeter gemessen werden. (Die Homogenisierungseinrichtung kann aber auch mit Infrarotlicht genutzt werden.) Die Referenzflächen sollen für die Messung 5 Millimeter mal 5 Millimeter groß sein und in 10 mm Abstand vom Reflektionspunkt positioniert sein. Ein Material ist dann geeignet im Zusammenhang mit der Geometrie der Homogenisierungseinrichtung nach der vorliegenden Erfindung verwendet zu werden, wenn die Bestrahlungsstärke der zweiten Referenzfläche um einen Faktor 3 geringer ist als die Bestrahlungsstärke der ersten Referenzfläche. Der Faktor kann für besonders geeignete Materialien durchaus wesentlich größer sein, beispielsweise auch größer als 5 oder 10 oder 20. Die Reflexion der Flächen weicht also deutlich von einer Spiegelreflexion ab.

Messserien haben bestätigt, dass sowohl in Bezug auf die Helligkeitsverteilung als auch in Bezug auf die spektrale Verteilung die erfindungsgemäße Homogenisierungseinrichtung hervorragende Ergebnisse liefert. Eine Ulbrichtkugel liefert keine für die praktische Anwendung besseren Ergebnisse. Testweise wurde eine 3x3 cm große Platte ausgeleuchtet, auf der neun Messfelder von jeweils 1 x1 cm Größe angeordnet waren.

Diese Testfläche wurde einmal mit Hilfe der erfindungsgemäßen Homogenisierungseinrichtung aus Fig. 1 und einmal mit einer Einrichtung mit einer Ulbrichtkugel ausgeleuchtet. Die Lichtquelle war jeweils gleich, es wurde eine flächige LED-Lichtquelle verwendet, so wie in Fig. 3 dargestellt, nämlich eine mit 80 LEDs, die 22 verschiedene Frequenzen ausstahlen. Für beide Homogenisierungseinrichtungen wurden drei Werte gemessen. Zum einen die Beleuchtungsstärke, zum anderen der Farbwiedergabeindex und zum Dritten die Farbtemperatur. Die jeweiligen Werte sind unten wiedergegeben, wobei CCT für die Messung der Lichtfarbe steht (in Anlehnung an den englischen Fachbegriff *Correlated Color Temperaturen*), CRI für die Messung des Farbwiedergabeindexes (in Anlehnung an den englischen Fachbegriff *Color Rendering Index*) und LUX für die Beleuchtungsstärke insgesamt.

Sowohl in Tabelle 2 sowie auch in Tabelle 3 wurde in jeder Spalte die Differenz zwischen dem maximalen und dem minimalen Wert ermittelt. Für jede Spalte wurde der Quotient aus dem Minimum und dem Maximum ermittelt und zur einfacheren Darstellung mit 100 multipliziert. Die entsprechenden Werte erscheinen in der Zeile "Uniformity".

**Tabelle 1 - Anordnung der Messpunkte**

| | | |
|---|---|---|
| P1 | P2 | P3 |
| P4 | P5 | P6 |
| P7 | P8 | P9 |

**Tabelle 2 - Messung mit einer Ulbrichtkugel**

| | CCT | CRI | LUX |
|---|---|---|---|
| P1 | 6577 | 98,7 | 1397 |
| P2 | 6581 | 98,6 | 1406 |
| P3 | 6582 | 98,6 | 1408 |
| P4 | 6589 | 98,6 | 1402 |
| P5 | 6609 | 98,6 | 1409 |
| P6 | 6620 | 98,6 | 1408 |
| P7 | 6606 | 98,6 | 1400 |
| P8 | 6619 | 98,6 | 1409 |
| P9 | 6620 | 98,6 | 1403 |
| Uniformity: | 99,35 | 99,90 | 99,15 |

**Tabelle 3 - Messung mit einer erfindungsgemäßen Homogenisierungseinrichtung**

| | CCT | CRI | LUX |
|---|---|---|---|
| P1 | 6585 | 98,9 | 2418 |
| P2 | 6609 | 98,9 | 2419 |
| P3 | 6658 | 99 | 2425 |
| P4 | 6617 | 98,9 | 2410 |
| P5 | 6653 | 99 | 2448 |
| P6 | 6683 | 99 | 2431 |
| P7 | 6674 | 99 | 2401 |
| P8 | 6647 | 99 | 2429 |
| P9 | 6693 | 99 | 2413 |
| Uniformity: | 98,39 | 99,90 | 98,08 |

Für alle praktischen und auch wissenschaftlichen Anmeldungen gelten Werte von mehr als 96 als sehr gut und ein Wert von mehr als 98 als hervorragend. Werte von über 98 werden von der kompakten, erfindungsgemäßen Homogenisierungseinrichtung im Hinblick auf alle drei gemessenen Parameter erreicht. Der für viele Anwendungen sehr wichtige Farbwiedergabeindex ist ebenso gut wie bei der baulich deutlich größeren Ulbrichtkugel mit einem Durchmesser von 30 cm.

Aus diesen Abbildungen und der vorangegangenen Beschreibung insgesamt wurde deutlich, wie sich eine zweckmäßige Homogenisierungseinrichtung herstellen lässt. Da die Einrichtung mehrere glatte Flächen aufweist, ist sie wesentlich kompakter als eine Kugel und kann gut mit anderen Aufbauten kombiniert werden.

### Bezugszeichenliste

- 10: Homogenisierungseinrichtung
- 12: Eintrittsöffnung
- 14: Flansch
- 16: Eintrittskammer
- 18: Zwischenkammer
- 20: Austrittskammer
- 22: Austrittsöffnung
- 24: Innenfläche
- 26: Außenfläche
- 24: LEDs
- 26: Trägerplatte
- 28: Loch
- 30: Trägermaterial
- 32: Beschichtung

- H1: erste Hauptachse
- H2: zweite Hauptachse
- h 1: Erstreckung der Eintrittskammer entlang H1
- h2: Erstreckung der Austrittskammer entlang H2
- a: Erstreckung der flächigen Lichtquelle in erster Richtung
- b: Erstreckung der flächigen Lichtquelle in zweiter Richtung
- L: Referenzlinie
- S: Senkrechte
- E: einfallender Strahl
- A: ausfallender Referenzstrahl
- P: Reflexionspunkt
- R1: erste Referenzfläche
- R2: zweite Referenzfläche

## Patentansprüche

1. Beleuchtungseinrichtung zur homogenen Ausleuchtung eines Objekts, welche eine Lichtquelle und eine zur Verbindung mit der Lichtquelle geeignete Homogenisierungseinrichtung (10) umfasst, wobei die Homogenisierungsvorrichtung (10) eine Eintrittsöffnung (12), eine hinter der Eintrittsöffnung (12) angeordnete Eintrittskammer (16), eine Zwischenkammer (18), eine Austrittskammer (20) und eine hinter der Austrittskammer (20) angeordnete Austrittsöffnung (22) aufweist und die Eintrittskammer (16), die Zwischenkammer (18) und die Austrittskammer (20) jeweils eine Außenfläche (26) und eine Innenfläche (24) aufweisen und sich die Eintrittskammer (16) entlang einer ersten Hauptachse (H1) erstreckt und sich die Austrittskammer (20) entlang einer zweiten Hauptachse (H2) erstreckt, und eine im Bereich der Eintrittsöffnung (12) angeordnete Lichtquelle Licht durch die Eintrittskammer (16), die Zwischenkammer (18), die Austrittskammer (20) und die Austrittsöffnung (22) auf ein auszuleuchtendes Objekt senden kann, wobei kein Lichtstrahl entlang einer Geraden von einem Punkt der Eintrittsöffnung (12) zu einem Punkt der Austrittsöffnung (22) gelangen kann und jeweils mindestens die Innenfläche (24) der Eintrittskammer (16), der Zwischenkammer (18) und der Austrittskammer (20) in jeweils mindestens einem ersten Bereich diffus reflektierend sind, so dass ein an einer dieser Innenflächen (24) reflektierter Lichtstrahl, welcher einfallend eine erste Referenzfläche (R1) mit einer ersten Bestrahlungsstärke ausleuchtet, ausfallend eine zweite Referenzfläche (R2) gleicher Größe mit einer zweiten Bestrahlungsstärke ausleuchtet, welche mindestens um einen Faktor 3 geringer ist als die erste Bestrahlungsstärke, wenn beide Referenzflächen (R1, R2) im Abstand von 10 Millimetern zum Reflexionspunkt (P) positioniert sind und wobei die Eintrittskammer (16) rohrförmig die erste Hauptachse (H1) umschließt und senkrecht zur ersten Hauptachse (H1) eine Vielzahl von Querschnitten aufweist, wobei die längste Ausdehnung eines Querschnitts der Eintrittskammer (16) jeweils kürzer als die erste Hauptachse (H1) ist und wobei ferner die Austrittskammer (20) rohrförmig die zweite Hauptachse (H2) umschließt und senkrecht zur zweiten Hauptachse (H2) eine Vielzahl von Querschnitten aufweist, wobei die längste Ausdehnung eines Querschnitts der Austrittskammer (20) jeweils kürzer als die zweite Hauptachse (H₂) ist, **dadurch gekennzeichnet, dass** die Eintrittsöffnung (12) eine erste Fläche umfasst und die Lichtquelle eine flächige Lichtquelle ist, welche über eine zweite Fläche Licht sendet, wobei die Größe der zweiten Fläche mindestens 50% der Größe der ersten Fläche beträgt und als Lichtquelle eine Vielzahl von LED-Lampen (24) vorhanden ist.

2. Beleuchtungseinrichtung nach Anspruch 1, wobei mindestens eine der Innenflächen (24) in dem ersten Bereich einen Glanzwert von 10 oder weniger aufweist.

3. Beleuchtungseinrichtung nach einem der vorhergehenden Ansprüche, wobei die Eintrittskammer (16) quaderförmig ist und die Austrittskammer (20) quaderförmig ist.

4. Beleuchtungseinrichtung nach einem der vorhergehenden Ansprüche, wobei ein an einer dieser Innenflächen (24) reflektierter Lichtstrahl, welcher einfallend einen ersten Raumwinkel beleuchtet, ausfallend einen mindestens zehnmal größeren Raumwinkel beleuchtet.

5. Beleuchtungseinrichtung nach einem der vorhergehenden Ansprüche, wobei die erste Hauptachse (H1) und die zweite Hauptachse (H2) senkrecht zueinander verlaufen.

6. Beleuchtungseinrichtung nach Anspruch 1, wobei alle Querschnitte gleiche Form haben.

7. Beleuchtungseinrichtung nach Anspruch 1, wobei die Querschnitte die Form eines Kreises oder eines Quadrats haben.

8. Beleuchtungseinrichtung nach einem der vorhergehenden Ansprüche, wobei an den Innenflächen (24) der Eintrittskammer (16), der Zwischenkammer (18) und/oder der Austrittskammer (20) keine Schatter vorgesehen sind.

9. Beleuchtungseinrichtung nach einem der vorhergehenden Ansprüche, wobei die Innenfläche(n) (24) der Eintrittskammer (16), der Zwischenkammer (18) und/oder der Austrittskammer (20) vollständig diffus reflektierend sind.

10. Beleuchtungseinrichtung nach einem der vorhergehenden Ansprüche, wobei die Innenfläche(n) (24) der Eintrittskammer (16), der Zwischenkammer (18) und/oder der Austrittskammer (20) eine Beschichtung aus Bariumsulfat oder Titandioxid oder Polytetrafluorethylen umfassen.

11. Beleuchtungseinrichtung nach einem der vorhergehenden Ansprüche, wobei die LED-Lampen (24) in einer Ebene angeordnet sind.

12. Beleuchtungseinrichtung nach einem der vorhergehenden Ansprüche, wobei die Lichtquelle eine Vielzahl von Strahlern verschiedener Frequenz umfasst.

## Claims

1. A lighting device for homogeneously illuminating an object, which lighting device comprises a light source and a homogenisation device (10) suitable for connection to the light source, wherein the homogenisation device (10) has an inlet opening (12), an inlet chamber (16) arranged behind the inlet opening (12), an intermediate chamber (18), an outlet chamber (20), and an outlet opening (22) arranged behind the outlet chamber (20), and the inlet chamber (16), the intermediate chamber (18), and the outlet chamber (20) each have an outer face (26) and an inner face (24), and the inlet chamber (16) extends along a first primary axis (H1), and the outlet chamber (20) extends along a second primary axis (H2), and a light source arranged in the region of the inlet opening (12) can emit light through the inlet chamber (16), intermediate chamber (18), the outlet chamber (20), and the outlet opening (22) onto an object to be illuminated, wherein it is not possible for a light beam to pass along a straight line from any point of the inlet opening (12) to any point of the outlet opening (22), and at least the inner face (24) of each of the inlet chamber (16), intermediate chamber (18), and the outlet chamber (20) is diffusely reflective in each case in at least a first region, so that a light beam reflected on one of these inner faces (24), which light beam illuminates a first reference face (R1) with a first irradiance when incident, when emergent illuminates a second reference face (R2) of the same size with a second irradiance, which is lower than the first irradiance by at least a factor of 3, when both reference faces (R1, R2) are positioned at a distance of 10 millimetres from the reflection point (P), and wherein the inlet chamber (16) surrounds the first primary axis (H1) in a tubular manner and has a plurality of cross-sections perpendicular to the first primary axis (H1), wherein the longest extent of each cross-section of the inlet chamber (16) is shorter than the first primary axis (H1), and wherein the outlet chamber (20) also surrounds the second primary axis (H2) in a tubular manner and has a plurality of cross-sections perpendicular to the second primary axis (H2), wherein the longest extent of each cross-section of the outlet chamber (20) is shorter than the second primary axis (H2), **characterised in that** the inlet opening (12) comprises a first face and the light source is a planar light source which emits light via a second face, wherein the size of the second face is at least 50% of the size of the first face and a plurality of LED lamps (24) is provided as light source.

2. The lighting device according to claim 1, wherein at least one of the inner faces (24) in the first region has a gloss value of 10 or less.

3. The lighting device according to any one of the preceding claims, wherein the inlet chamber (16) is cube-shaped and the outlet chamber (20) is cube-shaped.

4. The lighting device according to any one of the preceding claims, wherein a light beam reflected at one of these inner faces (24), which light beam illuminates a first spatial angle when incident, when emergent illuminates a spatial angle that is at least ten times greater.

5. The lighting device according to any one of the preceding claims, wherein the first primary axis (H1) and the second primary axis (H2) run perpendicularly to one another.

6. The lighting device according to claim 1, wherein all cross-sections have the same shape.

7. The lighting device according to claim 1, wherein the cross-sections have the shape of a circle or square.

8. The lighting device according to any one of the preceding claims, wherein no screens are provided on the inner faces (24) of the inlet chamber (16), the intermediate chamber (18) and/or the outlet chamber (20).

9. The lighting device according to any one of the preceding claims, wherein the inner face(s) (24) of the inlet chamber (16), the intermediate chamber (18) and/or the outlet chamber (20) are completely diffusely reflective.

10. The lighting device according to any one of the preceding claims, wherein the inner face(s) (24) of the inlet chamber (16), the intermediate chamber (18) and/or the outlet chamber (20) comprise a coating formed of barium sulphate or titanium dioxide or polytetrafluoroethylene.

11. The lighting device according to any one of the preceding claims, wherein the LED lamps (24) are arranged in a single plane.

12. The lighting device according to any one of the preceding claims, wherein the light source comprises a plurality of emitters of different frequency.

## Revendications

1. Système d'éclairage pour un éclairage uniforme d'un objet, lequel comprend une source de lumière et un système d'homogénéisation (10) approprié pour la connexion avec la source de lumière,
où
le dispositif d'homogénéisation (10) présente un orifice d'entrée (12), une chambre d'entrée (16) disposée derrière l'orifice d'entrée (12), une chambre intermédiaire (18), une chambre de sortie (20) et un orifice de sortie (22) disposé derrière la chambre de sortie (20), et la chambre d'entrée (16), la chambre intermédiaire (18) et la chambre de sortie (20) présentent respectivement une surface extérieure (26) et une surface intérieure (24), et la chambre d'entrée (16) s'étend le long d'un premier axe principal (H1) et la chambre de sortie (20) s'étend le long d'un deuxième axe principal (H2), et une source de lumière disposée dans la région de l'orifice d'entrée (12) peut émettre de la lumière par la chambre d'entrée (16), la chambre intermédiaire (18), la chambre de sortie (20) et l'orifice de sortie (22) vers un objet à éclairer,
où le rayonnement de lumière peut aller le long d'une droite d'un point de l'orifice d'entrée (12) vers un point de l'orifice de sortie (22) et, respectivement les surfaces intérieures (24) de la chambre d'entrée (16), de la chambre intermédiaire (18) et de la chambre de sortie (20) sont réfléchies de manière diffuse dans respectivement au moins une première région, de sorte qu'un faisceau de lumière réfléchi sur ces surfaces intérieures (24), lequel illumine de manière incidente une première surface de référence (R1) avec une première puissance de rayonnement, illumine de manière transmise une deuxième surface de référence (R2) de même taille avec une deuxième puissance de rayonnement, laquelle est inférieure d'au moins un facteur 3 par rapport à la première puissance de rayonnement lorsque les deux surfaces de référence (R1, R2) sont positionnées avec une distance de 10 millimètres par rapport au point de réflexion (P) et
où la chambre d'entrée (16) entoure le premier axe principal (H1) en formant un tube et présente perpendiculairement au premier axe principal (H) une multitude de découpes transversales, où l'extension la plus longue d'une découpe transversale de la chambre de sortie (20) est respectivement plus courte que le premier axe principal (H1) et où en outre la chambre de sortie (20) entoure le deuxième axe principal (H2) en formant un tube et présente perpendiculairement par rapport au deuxième axe principal (H2) une multitude de découpes transversales, où l'extension la plus longue d'une découpe transversale de la chambre de sortie (20) est respectivement plus courte que le deuxième axe principal (H2), **caractérisé en ce que** l'orifice d'entrée (12) comprend une première surface et la source de lumière est une source de lumière plane, laquelle émet de la lumière sur une deuxième surface, où la taille de la deuxième surface est d'au moins 50 % la taille de la première surface et qu'une multiplicité de lampes à DEL (24) est présente en tant que source de lumière.

2. Système d'éclairage selon la revendication 1, dans lequel au moins une des surfaces intérieures (24) présente une valeur de brillance de 10 ou inférieure dans la première région.

3. Système d'éclairage selon l'une des revendications précédentes, dans lequel la chambre d'entrée (16) est de forme parallélépipédique et la chambre de sortie (20) est de forme parallélépipédique.

4. Système d'éclairage selon l'une des revendications précédentes, dans lequel un faisceau de lumière, réfléchi sur une de ces surfaces intérieures (24), lequel illumine un premier angle de chambre de manière incidente, illumine de manière transmise un angle de chambre au moins dix fois plus grand.

5. Système d'éclairage selon l'une des revendications précédentes, dans lequel le premier axe principal (H1) et le deuxième axe principal (H2) s'étendent perpendiculairement l'un par rapport à l'autre.

6. Système d'éclairage selon la revendication 1, dans lequel toutes les sections transversales ont la même forme.

7. Système d'éclairage selon la revendication 1, dans lequel les sections transversales ont la forme d'un cercle ou d'un carré.

8. Système d'éclairage selon l'une des revendications précédentes, dans lequel aucun dispositif d'ombrage n'est prévu sur les surfaces intérieures (24) de la chambre d'entrée (16), de la chambre intermédiaire (18) et/ou de la chambre de sortie (20).

9. Système d'éclairage selon l'une des revendications précédentes, dans lequel la (les) surface(s) intérieure(s) (24) de la chambre d'entrée (16), de la chambre intermédiaire (18) et/ou de la chambre de sortie (20) sont totalement réfléchissantes de manière diffuse.

10. Système d'éclairage selon l'une des revendications précédentes, dans lequel la (les) surface(s) intérieure(s) (24) de la chambre d'entrée (16), de la chambre intermédiaire (18) et/ou de la chambre de sortie (20) comprennent un revêtement à base de sulfate de baryum ou d'oxyde de titane ou de polytétrafluoroéthylène.

11. Système d'éclairage selon l'une des revendications précédentes, dans lequel les lampes à DEL (24) sont disposées dans un plan.

12. Système d'éclairage selon l'une des revendications précédentes, dans lequel la source de lumière comprend une multiplicité de sources de rayonnement de diverses fréquences.
